# EUROPÄISCHE PATENTSCHRIFT

(11) **EP 1 082 014 B1**
(45) Veröffentlichungstag und Bekanntmachung des Hinweises auf die Patenterteilung: **06.08.2003**
(21) Anmeldenummer: 99939767.2
(22) Anmeldetag: 17.05.1999
(51) Int. Cl.: A01N 43/22

(54) **SYNERGISTISCHE INSEKTIZIDE MISCHUNGEN**
SYNERGISTIC INSECTICIDE MIXTURES
MELANGES INSECTICIDES A EFFET DE SYNERGIE

(30) Priorität: 26.05.1998 DE 19823396
(43) Veröffentlichungstag der Anmeldung: 14.03.2001
(73) Patentinhaber: Bayer CropScience AG, 40789 Monheim (DE)
(72) Erfinder: ANDERSCH, Wolfram, D-51469 Bergisch Gladbach (DE); SCHNORBACH, Hans-Jürgen, D-40789 Monheim (DE); WOLLWEBER, Detlef, D-42113 Wuppertal (DE)
(86) Internationale Anmeldenummer: EP9903394
(87) Internationale Veröffentlichungsnummer: WO99060857

(56) Entgegenhaltungen:
- DATABASE CROPU [Online] STN-International STN-accession no. 98-88801, C.E.SORENSON ET AL.: "Control of tobacco aphids with systemic insecticides, 1997B" XP002114423 & ARTHROPOD MANAGE.TESTS, Bd. 23, 1998, Seite 302
- DATABASE CROPU [Online] STN-International STN-accession no. 1997-84126, R.M.DUCHESNE ET AL.: "Efficacite de spinosad a differentes concentrations contre le doryphore de la pomme de terre, saison 1996" XP002114424 & PEST MANAGE.RES.REP.,1996, Seite 31
- CHEMICAL ABSTRACTS, vol. 127, no. 9, 1. September 1997 (1997-09-01) Columbus, Ohio, US; abstract no. 118585, D.R.JOHNSON ET AL.: "Comparison of new insecticides for the control of the bollworm (Helicoverpa zea) and tobacco budworm (Heliothis virescens) in Arkansas" XP002114422 & PROC. - BELTWIDE COTTON CONF. , Bd. 2, 1997, Seiten 947-949,

## Beschreibung

Die Erfindung betrifft synergistische insektizide Mischungen enthaltend Spinosad und mindestens einen Agonisten bzw. Antagonisten von nicotinergen Acetylcholinrezeptoren und ihre Verwendung zur Bekämpfung von tierischen Schädlingen.

Es ist bereits bekannt geworden, dass man Spinosad zur Bekämpfung von Insekten verwenden kann (US-5 362 634, siehe auch DowElanco trade magazine Down to Earth, Vol. 52, No. 1, 1997 und die darin zitierte Literatur).

Spinosad allein zeigt jedoch nicht immer befriedigende insektizide Wirkung.

Des weiteren ist auch bekannt geworden, dass man Agonisten und Antagonisten von nicotinergen Acetylcholinrezeptoren zur Bekämpfung von Insekten verwenden kann.

Es wurde nun gefunden, dass Mischungen aus Spinosad und mindestens einem Agonisten bzw. Antagonisten von Acetylcholinrezeptoren der Formel (IIIa) bis (IIIm) synergistisch wirksam sind und sich zur Bekämpfung tierischer Schädlinge eignen. Aufgrund dieses Synergismus können deutlich geringere Wirkstoffmengen verwendet werden, d.h. die Wirkung der Mischung ist größer als die Wirkung der Einzelkomponenten.

Es können auch die in den genannten Literatur beschriebenen Säureadditionssalze von Spinosad verwendet werden.

Bei den Verbindungen der Formeln (IIIa) bus (IIIm) handelt es sich um Agonisten und Antagonisten der nicotinergen Acetylcholinrezeptoren. Diese sind bekannt aus folgenden Publikationen:
Europäische Offenlegungsschriften Nr. 464 830, 428 941, 425 978, 386 565, 383 091, 375 907, 364 844, 315 826, 259 738, 254 859, 235 725, 212 600, 192 060, 163 855, 154 178, 136 636, 136 686, 303 570, 302 833, 306 696, 189 972, 455 000, 135 956, 471 372, 302 389, 428 941, 376 279, 493 369, 580 553, 649 845, 685 477, 483 055, 580 553;
Deutsche Offenlegungsschriften Nr. 3 639 877, 3 712 307;
Japanische Offenlegungsschriften Nr. 03 220 176, 02 207 083, 63 307 857, 63 287 764, 03 246 283, 04 9371, 03 279 359, 03 255 072, 05 178 833, 07 173 157, 08 291 171;
US-Patentschriften Nr. 5 034 524, 4 948 798, 4 918 086, 5 039 686, 5 034 404, 5 532 365, 4 849 432;
PCT-Anmeldungen Nr. WO 91/17 659, 91/4965;
Französische Anmeldung Nr. 2611 114;
Brasilianische Anmeldung Nr. 88 03 621.

Die erfindungsgemäßen Mitteln enthalten mindestens eine Verbindung der folgenden Formeln: 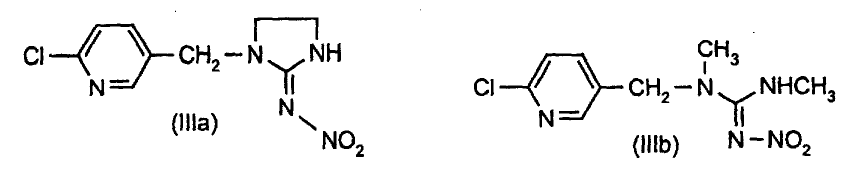 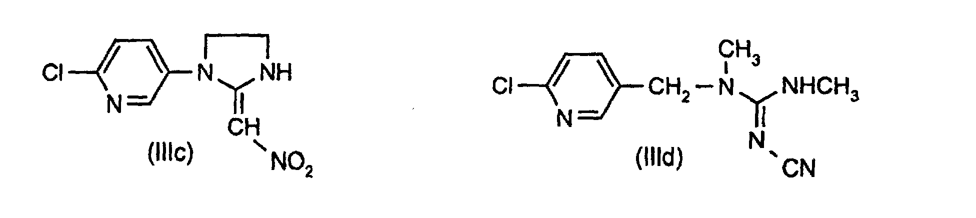 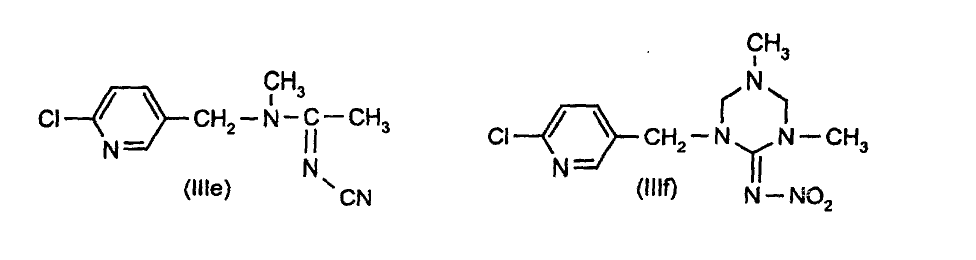 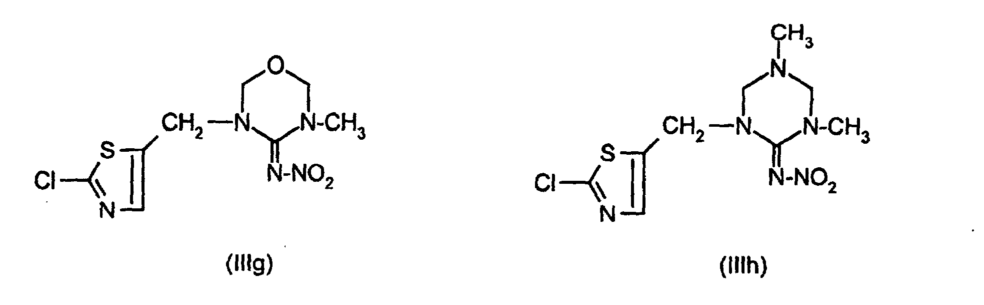 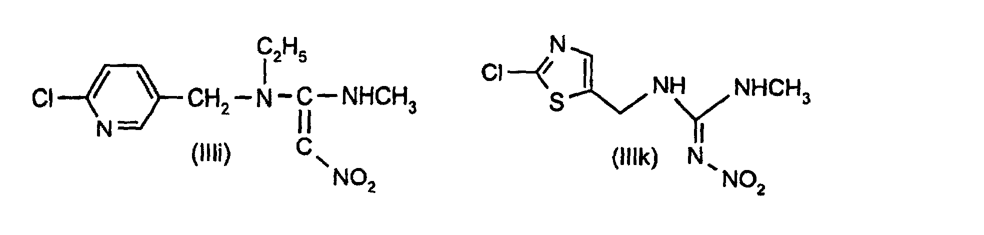 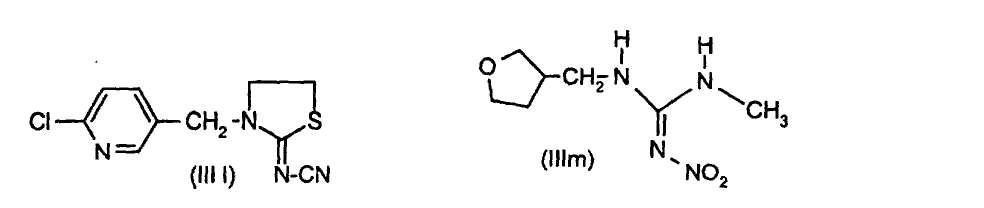 insbesondere eine Verbindung der folgenden Formeln 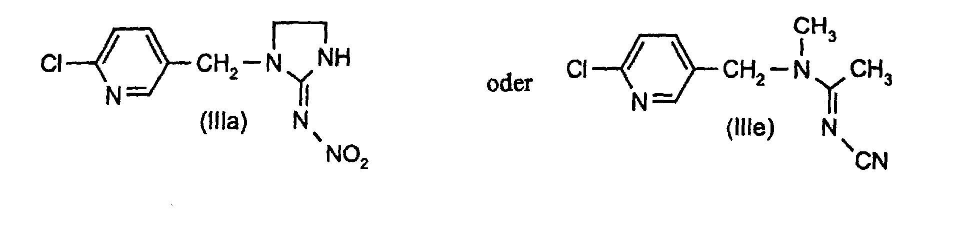 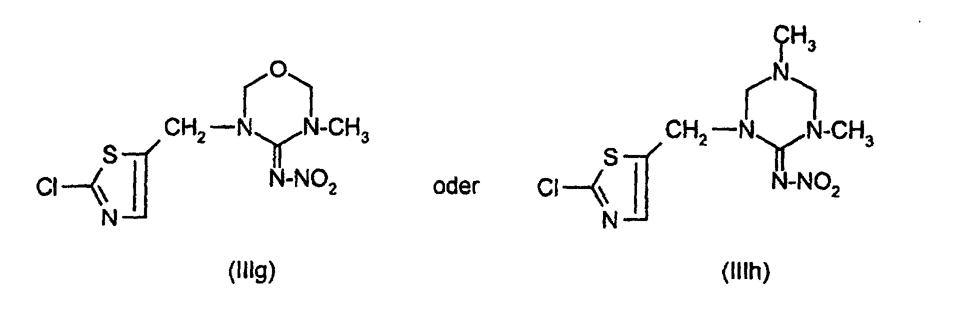 oder 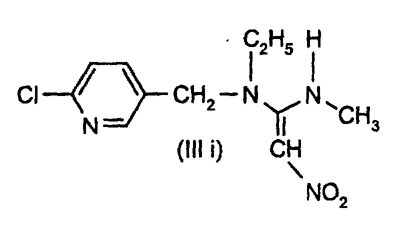 oder 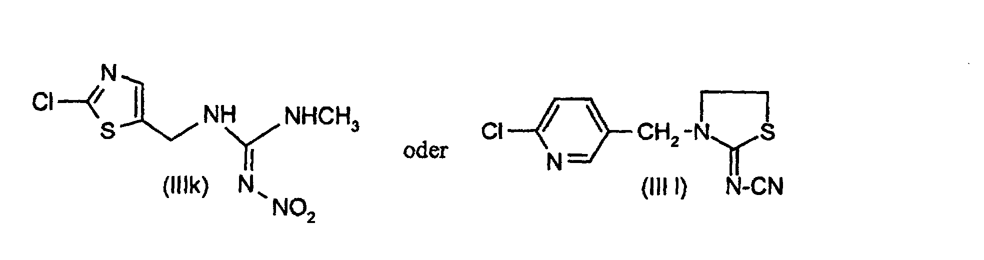 oder

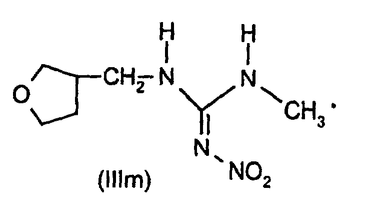

Ganz besonders bevorzugt sind die Verbindungen der Formeln (IIIa), (IIIk), (IIIl).

Weiterhin ganz besonders bevorzugt sind die Verbindungen der Formeln (IIIe), (IIIg), (IIIh), (IIIm), (IIIc).

Die Wirkstoffinischungen eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorratsschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spp..

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Acheta domesticus, Gryllotalpa spp., Locusta migratoria migratorioides, Melanoplus spp., Schistocerca gregaria.

Aus der Ordnung der Blattaria z.B. Blatta orientalis, Periplaneta americana, Leucophaea maderae, Blattella germanica.

Aus der Ordnung der Dermaptera z.B. Forficula auricularia.

Aus der Ordnung der Isoptera z.B. Reticulitermes spp..

Aus der Ordnung der Phthiraptera z.B. Pediculus humanus corporis, Haematopinus spp., Linognathus spp., Trichodectes spp., Damalinia spp..

Aus der Ordnung der Thysanoptera z.B. Hercinothrips femoralis, Thrips tabaci, Thrips palmi, Frankliniella accidentalis.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp..

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp..

Aus der Ordnung der Siphonaptera z.B. Xenopsylla cheopis, Ceratophyllus spp..

Aus der Klasse der Arachnida z.B. Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp., Brevipalpus spp..

Zu den pflanzenparasitären Nematoden gehören z.B. Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp., Bursaphelenchus spp..

Wenn die Wirkstoffe in den erfindungsgemäßen Wirkstoff-Kombinationen in bestimmten Gewichtsverhältnissen vorhanden sind, zeigt sich der synergistische Effekt besonders deutlich.

Das Verhältnis der eingesetzten Verbindungen der Formeln (I) bzw. (II) und der oder den Verbindungen der Formel (III), sowie die Gesamtmenge der Mischung ist von der Art und dem Vorkommen der Insekten abhängig. Die optimalen Verhältnisse und Gesamteinsatzmengen können bei jeder Anwendung jeweils durch Testreihen ermittelt werden. Im Allgemeinen ist das Verhältnis der Verbindungen der Formeln (I) bzw. (II) und der oder den Verbindungen der Formel (III) 1:100 bis 100:1, vorzugsweise 1:25 bis 25:1 und besonders bevorzugt 1:5 bis 5:1. Hierbei handelt es sich um Gewichtsteile.

Die erfindungsgemäßen Wirkstoffmischungen können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe. Im einzelnen seien die weiter obengenannten Insektizide und Fungizide als Zumischpartner genannt.

Als Insektizide, die gegebenenfalls zugemischt werden können handelt es sich beispielsweise um:
Phosphorsäureester wie Azinphos-ethyl, Azinphos-methyl, α-1(4-Chlorphenyl)-4-(O-ethyl, S-propyl)phosphoryloxy-pyrazol, Chlorpyrifos, Coumaphos, Demeton, Demeton-S-methyl, Diazinon, Dichlorvos, Dimethoate, Ethoate, Ethoprophos, Etrimfos, Fenitrothion, Fenthion, Heptenophas, Parathion, Parathion-methyl, Phosalone, Phoxim, Pirimiphos-ethyl, Pirimiphos-methyl, Profenofos, Prothiofos, Sulfprofos, Triazophos und Trichlorphon;
Carbamate wie Aldicarb, Bendiocarb, α-2-(1-Methylpropyl)-phenylmethylcarbamat, Butocarboxim, Butoxycarboxim, Carbaryl, Carbofuran, Carbosulfan, Cloethocarb, Isoprocarb, Methomyl, Oxamyl, Pirimicarb, Promecarb, Propoxur und Thiodicarb;
Organosiliciumverbindungen, vorzugsweise Dimethyl(phenyl)silyl-methyl-3-phenoxybenzylether wie Dimethyl-(4-ethoxyphenyl)-silylmethyl-3-phenoxybenzylether oder
(Dimethylphenyl)-silyl-methyl-2-phenoxy-6-pyridylmethylether wie z.B. Dimethyl-(9-ethoxy-phenyl)-silylmethyl-2-phenoxy-6-pyridylmethylether oder [(Phenyl)-3-(3-phenoxyphenyl)-propyl](dimethyl)-silane wie z.B. (4-Ethoxyphenyl)-[3-(4-fluoro-3-phenoxyphenyl-propyl]dimethyl-silan, Silafluofen;
Pyrethroide wie Allethrin, Alphamethrin, Bioresmethrin, Byfenthrin, Cycloprothrin, Cyfluthrin, Decamethrin, Cyhalothrin, Cypermethrin, Deltamethrin, Alpha-cyano-3-phenyl-2-methylbenzyl-2,2-dimethyl-3-(2-chlor-2-trifluor-methylvinyl)cyclopropancarboxylat, Fenpropathrin, Fenfluthrin, Fenvalerate, Flucythrinate, Flumethrin, Fluvalinate, Permethrin, Resmethrin und Tralomethrin;
Nitroimine und Nitromethylene wie 1-[(6-Chlor-3-pyridinyl)-methyl]-4,5-dihydro-N-nitro-1H-imidazol-2-amin (Imidacloprid), N-[(6-Chlor-3-pyridyl)methyl-N²-cyano-N¹-methylacetamide (NI-25);
Abamectin, AC 303.630, Acephate, Acrinathrin, Alanycarb, Aldoxycarb, Aldrin, Amitraz, Azamethiphos, Bacillus thuringiensis, Phosmet, Phosphamidon, Phosphine, Prallethrin, Propaphos, Propetamphos, Prothoate, Pyraclofos, Pyrethrins, Pyridaben, Pyridafenthion, Pyriproxyfen, Quinalphos, RH-7988, Rotenone, Sodium fluoride, Sodium hexafluorosilicate, Sulfotep, Sulfuryl fluoride, Tar Oils, Teflubenzuron, Tefluthrin, Temephos, Terbufos, Tetrachlorvinphos, Tetramethrin, O-2-tert.-Butylpyrimidin-5-yl-o-isopropyl-phosphorothiate, Thiocyclam, Thiofanox, Thiometon, Tralomethrin, Triflumuron, Trimethacarb, Vamidothion, Verticillium Lacanii, XMC, Xylylcarb, Benfuracarb, Bensultap, Bifenthrin, Bioallethrin, MERbioallethrin (S)-cyclopentenyl isomer, Bromophos, Bromophos-ethyl, Buprofezin, Cadusafos, Calcium Polysulfide, Carbophenothion, Cartap, Chinomethionat, Chlordane, Chlorfenvinphos, Chlorfluazuron, Chlormephos, Chloropicrin, Chlorpyrifos, Cyanophos, Beta-Cyfluthrin, Alpha-cypermethrin, Cyophenothrin, Cyromazine, Dazomet, DDT, Demeton-S-methylsulphon, Diafenthiuron, Dialifos, Dicrotophos, Diflubenzuron, Dinoseb, Deoxabenzofos, Diaxacarb, Disulfoton, DNOC, Empenthrin, Endosulfan, EPN, Esfenvalerate, Ethiofencarb, Ethion, Etofenprox, Fenobucarb, Fenoxycarb, Fensulfothion, Fipronil, Flucycloxuron, Flufenprox, Flufenoxuron, Fonofos, Formetanate, Formothion, Fosmethilan, Furathiocarb, Heptachlor, Hexaflumuron, Hydramethylnon, Hydrogen Cyanide, Hydroprene, IPSP, Isazofos, Isofenphos, Isoprothiolane, Isoxathion, Iodfenphos, Kadethrin, Lindane, Malathion, Mecarbam, Mephosfolan, Mercurous, chloride, Metam, Metarthizium, anisopliae, Methacrifos, Methamidophos, Methidathion, Methiocarb, Methoprene, Methoxychlor, Methyl isothiocyanate, Metholcarb, Mevinphos, Monocrotophos, Naled, Neodiprion sertifer NPV, Nicotine, Omethoate, Oxydemeton-methyl, Pentachlorophenol, Petroleum oils, Phenothrin, Phenthoate, Phorate.

Dabei können die gegebenenfalls noch zumischbaren weiteren Insektizide auch aus der Klasse der Verbindungen der allgemeinen Formel (I) stammen.

Als gegebenenfalls noch zumischbaren Fungizide kommen vorzugsweise in Frage:

### Triazole wie:

Azaconazole, Propiconazole, Tebuconazole, Cyproconazole, Metconazole, Amitrole, Azocyclotin, BAS 480F, Bitertanol, Difenoconazole, Fenbuconazole, Fenchlorazole, Fenethanil, Fluquinconazole, Flusilazole, Flutriafol, Imibenconazole, Isozofos, Myclobutanil, Paclobutrazol, (+)-cis-1-(4-chlorphenyl)-2-(1H-1,2,4-triazol-1-yl)-cycloheptanol, Tetraconazole, Triadimefon, Triadimenol, Triapenthenol, Triflumizole, Triticonazole, Uniconazole sowie deren Metallsalze und Säureaddukte.

### Imidazole wie:

Imazalil, Pefurazoate, Prochloraz, Triflumizole, 2-(1-tert-Butyl)-1-(2-chlorphenyl)-3-(1,2,4-triazol-1-yl)-propan-2-ol, Thiazolcarboxanilide wie 2',6'-Dibromo-2-methyl-4-trifluoromethoxy-4'-trifluoromethyl-1,3-thiazole-5-carboxanilide, 1-Imidazolyl-1-(4'chlorophenoxy)-3,3-dimethylbutan-2-on sowie deren Metallsalze und Säureaddukte.

Methyl(E)-2-[2-[6-(2-cyanophenoxy)pyrimidin-4-yloxy]phenyl]3-methoxyacrylate, methyl(E)-2-[2-[6-(2-thioamidophenoxy)pyrimidin-4-yloxy]phenyl]-3-methoxyacrylate, methyl(E)-2-[2-[6-(2-fluorophenoxy)pyrimidin-4-yloxy]phenyl]-3-methoxyacrylate, methyl(E)-2-[2-[6-(2,6-difluorophenoxy)pyrimidin-4-yloxy]phenyl]-3-methoxyacrylate, methyl(E)-2-[2-[3-(pyrimidin-2-yloxy)phenoxy]phenyl]-3-methoxyacrylate, methyl(E)-2-[2-[3-(5-methylpyrimidin-2-yloxy)-phenoxy]phenyl]-3-methoxyacrylate, methyl(E)-2-[2-[3-(phenyl-sulfonyloxy)phenoxy]phenyl]-3-methoxyacrylate, methyl(E)-2-[2-[3-(4-nitrophenoxy)phenoxy]phenyl]-3-methoxyacrylate, methyl(E)-2-[2-phenoxyphenyl]-3-methoxyacrylate, methyl(E)-2-[2-(3,5-dimethylbenzoyl)pyrrol-1-yl]-3-methoxyacrylate, methyl(E)-2-[2-(3-methoxyphenoxy)phenyl]-3-methoxyacrylate, methyl(E)-2-[2-(2-phenylethen-1-yl)-phenyl]-3-methoxyacrylate, methyl(E)-2-[2-(3,5-dichlorophenoxy)pyridin-3-yl]-3-methoxyacrylate, methyl(E)-2-(2-(3-(1,1,2,2-tetrafluoroethoxy)phenoxy)phenyl)-3-methoxyacrylate, methyl(E)-2-(2-[3-(alpha-hydroxybenzyl)phenoxy]phenyl)-3-methoxyacrylate, methyl(E)-2-(2-(4-phenoxypyridin-2-yloxy)phenyl)-3-methoxyacrylate, methyl(E)-2-[2-(3-n-propyloxyphenoxy)phenyl]3-methoxyacrylate, methyl(E)-2-[2-(3-isopropyloxyphenoxy)phenyl]-3-methoxyacrylate, methyl(E)-2-[2-[3-(2-fluorophenoxy)phenoxy]phenyl]-3-methoxyacrylate, methyl(E)-2-[2-(3-ethoxyphenoxy)-phenyl]-3-methoxyacrylate, methyl(E)-2-[2-(4-tert.-butylpyridin-2-yloxy)phenyl]-3-methoxyacrylate, methyl(E)-2-[2-[3-(3-cyanophenoxy)phenoxy]phenyl]-3-methoxyacrylate, methyl(E)-2-[2-(3-methylpyridin-2-yloxymethyl)phenyl]-3-methoxyacrylate, methyl(E)-2-[2-[6-(2-methylphenoxy)pyrimidin-4-yloxy]phenyl]-3-methoxyacrylate, methyl(E)-2-[2-(5-bromopyridin-2-yloxymethyl)phenyl]-3-methoxyacrylate, methyl(E)-2-[2-(3-(3-iodopyridin-2-yloxy)phenoxy)phenyl]-3-methoxyacrylate, methyl(E)-2-[2-[6-(2-chloropyridin-3-yloxy)pyrimidin-4-yloxy]phenyl]-3-methoxyacrylate, (E),(E)methyl-2-[2-(5,6-dimethylpyrazin-2-ylmethyloximinomethyl)phenyl]-3-methoxyacrylate, (E)-methyl-2-{2-[6-(6-methylpyridin-2-yloxy)pyrimidin-4-yloxy]phenyl}-3-methoxyacrylate, (E),(E)methyl-2-{2-(3-methoxyphenyl)-methyloximinomethyl]phenyl}-3-methoxyacrylate, (E)methyl-2-{2-(6-(2-azidophenoxy)-pyrimidin-4-yloxy]phenyl}3-methoxyacrylate, (E),(E)methyl-2-{2-[6-phenylpyrimidin-4-yl)-methyloximinomethyl]phenyl}-3-methoxyacrylate, (E),(E)methyl-2-{2-[(4-chlorophenyl)-methyloximinomethyl]phenyl}-3-methoxyacrylate, (E)methyl-2-{2-[6-(2-n-propylphenoxy)-1,3,5-triazin-4-yloxy]phenyl}-3-methoxyacrylate, (E),(E)methyl-2-{2-[(3-nitrophenyl)methyloximinomethyl]phenyl}-3-methoxyacrylate;

### Succinat-Dehydrogenase Inhibitoren wie:

Fenfuram, Furcarbanil, Cyclafluramid, Furmecyclox, Seedvax, Metsulfovax, Pyrocarbolid, Oxycarboxin, Shirlan, Mebenil (Mepronil), Benodanil, Flutolanil (Moncut); Naphthalin-Derivate wie Terbinafine, Naftifine, Butenafine, 3-Chloro-7-(2-aza-2,7,7-trimethyl-oct-3-en-5-in);
Sulfenamide wie Dichlofluanid, Tolylfluanid, Folpet, Fluorfolpet; Captan, Captofol; Benzimidazole wie Carbendazim, Benomyl, Furathiocarb, Fuberidazole, Thiophonatmethyl, Thiabendazole oder deren Salze;
Morpholinderivate wie Fenpropimorph, Falimorph, Dimethomorph, Dodemorph, Aldimorph, Fenpropidin und ihre arylsulfonsauren Salze, wie z.B. p-Toluolsulfonsäure und p-Dodecylphenyl-sulfonsäure;
Dithiocarbamate, Cufraneb, Ferbam, Mancopper, Mancozeb, Maneb, Metam, Metiram, Thiram Zeneb, Ziram;
Benzthiazole wie 2-Mercaptobenzothiazol;
Benzamide wie 2,6-Dichloro-N-(4-trifluoromethylbenzyl)-benzamide;
Borverbindungen wie Borsäure, Borsäureester, Borax;
Formaldehyd und Formaldehydabspaltende Verbindungen wie Benzylalkoholmono(poly)-hemiformal, Oxazolidine, Hexa-hydro-S-triazine, N-Methylolchloracetamid, Paraformaldehyd, Nitropyrin, Oxolinsäure, Tecloftalam;
Tris-N-(cyclohexyldiazeniumdioxy)-aluminium, N-(Cyclo-hexyldiazeniumdioxy)-tributylzinn bzw. K-Salze, Bis-N-(cyclohexyldiazeniumdioxy)-kupfer;
N-Methylisothiazolin-3-on, 5-Chlor-N-methylisothiazolin-3-on, 4,5-Dichloro-N-octylisothiazolin-3-on, N-Octyl-isothiazolin-3-on, 4,5-Trimethylen-isothiazolinone, 4,5-Benzisothiazolinone, N-Methylolchloracetamid;
Aldehyde wie Zimtaldehyd, Formaldehyd, Glutardialdehyd, β-Bromzimtaldehyd; Thiocyanate wie Thiocyanatomethylthiobenzothiazol, Methylenbisthiocyanat, usw;
quartäre Ammoniumverbindungen wie Benzyldimethyltetradecylammoniumchlorid, Benzyldimethyldodecylammoniumchlorid, Didecyldimethylammoniumchlorid;
Iodderivate wie Diiodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-butylcarbamat, 3-Iod-2-propinyl-n-hexylcarbamat, 3-Iod-2-propinyl-cyclohexylcarbamat, 3-Iod-2-propinyl-phenylcarbamat;
Phenolderivate wie Tribromphenol, Tetrachlorphenol, 3-Methyl-4-chlorphenol, 3,5-Dimethyl-4-chlorphenol, Phenoxyethanol, Dichlorphen, o-Phenylphenol, m-Phenylphenol, p-Phenylphenol, 2-Benzyl-4-chlorphenol und deren Alkali- und Erdalkalimetallsalze;
Mikrobizide mit aktivierter Halogengruppe wie Chloracetamid, Bronopol, Bronidox, Tectamer wie 2-Brom-2-nitro-1,3-propandiol, 2-Brom-4'-hydroxy-acetophenon, 2,2-Dibrom-3-nitril-propionamid, 1,2-Dibrom-2,4-dicyanobutan, β-Brom-β-nitrostyrol;
Pyridine wie 1-Hydroxy-2-pyridinthion (und ihre Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;
Metallseifen wie Zinn-, Kupfer-, Zinknaphtenat, -octoat, -2-ethylhexanoat, -oleat, -phosphat, -benzoat;
Metallsalze wie Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat, insbesondere Mischung mit Fixiermitteln;
Oxide wie Tributylzinnoxid, Cu₂O, CuO, ZnO;
Dialkyldithiocarbamate wie Na- und Zn-Salze von Dialkyldithiocarbamaten, Tetramethylthiuramdisulfid, Kalium-N-methyl-dithiocarbamat;
Nitrile wie 2,4,5,6-Tetrachlorisophthalodinitril, Dinatrium-cyano-dithioimidocarbamat;
Chinoline wie 8-Hydroxychinolin und deren Cu-Salze;
Mucochlorsäure, 5-Hydroxy-2(5H)-furanon;
4,5-Dichlorodithiazolinon, 4,5-Benzdithiazolinon, 4,5-Trimethylendithiazolinon, 4,5-Dichlor-(3H)-1,2-dithiol-3-on, 3,5-Dimethyl-tetrahydro-1,3,5-thiadiazin-2-thion, N-(2-p-Chlorbenzoylethyl)-hexaminiumchlorid, Kalium-N-hydroxymethyl-N'-methyl-dithiocarbamat,
2-Oxo-2-(4-hydroxy-phenyl)acethydroximsäure-chlorid,
Phenyl-(2-chlor-cyan-vinyl)sulfon,
Phenyl-(1,2-dichlor-2-cyan-vinyl)sulfon;
Ag-, Zn- oder Cu-haltige Zeolithe allein oder eingeschlossen in polymere Wirkstoffe, oder auch Mischungen aus mehrern der oben genannten Fungizide.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Wirkstoffmischungen können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Wannnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxy-methylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im Allgemeinen zwischen 0,1 und 95 Gewichtsprozent Wirkstoffmischung, vorzugsweise zwischen 0,5 und 90 Gewichtsprozent Wirkstoffmischung.

Die erfindungsgemäßen Mischungen können über den Boden angewendet werden.

Die erfindungsgemäßen Mischungen können über das Blatt angewendet werden.

Die erfindungsgemäßen Mischungen können besonders vorteilhaft zur Saatgutbeize eingesetzt werden.

Weiterhin können die erfindungsgemäßen Mischungen bevorzugt über den Boden angewendet werden.

Es ist ferner auch möglich, die erfindungsgemäßen Mischungen über ein Bewässerungssystem auszubringen, beispielsweise über das Gießwasser.

### Anwendungsbeispiele

### Beispiel 1

### Wirksamkeit von blattinsektiziden Formulierungen gegen saugende Schädlinge

Die Prüfung der insektiziden Wirkung erfolgt im Grenzkonzentrationstest. Von den Testpräparaten wird jeweils eine wässerige Verdünnungsreihe erstellt, wobei die einzelnen Konzentrationsstufen um den Faktor 5 verdünnt werden.

Um synergistische Wirkung zu ermitteln, werden schwach wirksame Konzentrationen von Chloronicotinylverbindungen mit unterschiedlichen Wirkstoffkonzentrationen von Tracer (Spinosad) kombiniert.

Als Versuchspflanzen dienen einblättrige Kohlpflänzchen, die mit Myzus persicae (Grüne Pfirsichblattlaus) infiziert sind. Die Triebe bzw. Blätter mit den Blattläusen werden für ca. 3 Sekunden in die jeweiligen Brühen getaucht. Anschließend werden die Versuche im Gewächshaus bei 21°C und 65 % relativer Luftfeuchte aufgestellt.

Die Auswertung nach Mortalität erfolgt nach 2 und 7 Tagen.

**Tabelle 1:**

| Mischungen Verbindung (IIIa) und Spinosad | | | | | | |
|---|---|---|---|---|---|---|
| **Wst.- Konz. (% a.i.) Spinosad** | **Myzus persicae auf Kohl / Abtötung in %** | | | | | |
| | **Auswertung nach** | | | | | |
| | **2 Tagen** | | | **7 Tagen** | | |
| | **Spinosad** | **Verbindung (IIIa) 0.0008 % a.i.** | **Spinosad & Verbindung (IIIa)** | **Spinosad** | **Verbindung (IIIa) 0,0008 % a.i.** | **Spinosad & Verbindung (IIIa)** |
| | | | | | | |
| | | | | | | |
| 0,1 | 0 | 90 | **100** | 0 | 78 | **100** |
| 0,02 | 0 | 90 | **100** | 0 | 78 | **100** |
| 0,004 | 0 | 90 | **100** | 0 | 78 | **100** |
| 0,0008 | 0 | 90 | **97** | 0 | 78 | **92** |
| 0,00016 | 0 | 90 | **95** | 0 | 78 | **86** |
| | | | | | | |
| | | | | | | |

| **Spinosad** | **Spinosad** | **Verbindung (IIIa) 0,00016 % a.i.** | **Spinosad & Verbindung (IIIa)** | **Spinosad** | **Verbindung (IIIa) 0,00016 % a.i.** | **Spinosad & Verbindung (IIIa)** |
|---|---|---|---|---|---|---|
| | | | | | | |
| | | | | | | |
| 0,1 | 0 | 18 | **95** | 0 | 2 | **99** |
| 0,02 | 0 | 18 | **89** | 0 | 2 | **99** |
| 0,004 | 0 | 18 | **86** | 0 | 2 | **80** |
| 0,0008 | 0 | 18 | **56** | 0 | 2 | **33** |
| 0,00016 | 0 | 18 | **19** | 0 | 2 | **3** |
| | | | | | | |
| | | | | | | |
| **Kontrolle** | | | 0 | | | 0 |
| Wst.-Konz. = Wirkstoff-Konzentration | | | | | | |
| a.i. = active ingredient = Wirkstoff | | | | | | |

**Tabelle 2:**

| Mischungen Verbindung (IIIg) und Spinosad | | | | | | |
|---|---|---|---|---|---|---|
| **Wst.- Konz. (% a.i.) Spinosad** | **Myzus persicae auf Kohl / Abtötung in %** | | | | | |
| | **Auswertung nach** | | | | | |
| | **2 Tagen** | | | **7 Tagen** | | |
| | **Spinosad** | **Verbindung (IIIg) 0,0008 % a.i.** | **Spinosad & Verbindung (IIIg)** | **Spinosad** | **Verbindung (IIIg) 0,0008 % a.i.** | **Spinosad & Verbindung (IIIg)** |
| | | | | | | |
| | | | | | | |
| 0,1 | 0 | 79 | **100** | 0 | 70 | **100** |
| 0,02 | 0 | 79 | **100** | 0 | 70 | **100** |
| 0,004 | 0 | 79 | **96** | 0 | 70 | **98** |
| 0,0008 | 0 | 79 | **90** | 0 | 70 | **91** |
| | | | | | | |
| | | | | | | |
| | | | | | | |

| **Spinosad** | **Spinosad** | **Verbindung (IIIg) 0,00016 % a.i.** | **Spinosad & Verbindung (IIIg)** | **Spinosad** | **Verbindung (IIIg) 0,00016 % a.i.** | **Spinosad & Verbindung (IIIg)** |
|---|---|---|---|---|---|---|
| | | | | | | |
| | | | | | | |
| 0,1 | 0 | 0 | **87** | 0 | 0 | **77** |
| 0,02 | 0 | 0 | **85** | 0 | 0 | **98** |
| 0,004 | 0 | 0 | **63** | 0 | 0 | **33** |
| | | | | | | |
| | | | | | | |
| | | | | | | |
| | | | | | | |
| **Kontrolle** | | | 0 | | | 0 |
| Wst.-Konz. = Wirkstoff-Konzentration | | | | | | |
| a.i. = active ingredient = Wirkstoff | | | | | | |

**Tabelle 3:**

| Mischungen Verbindung (IIIk) und Spinosad | | | | | | |
|---|---|---|---|---|---|---|
| **Wst.- Konz. (% a.i.) Spinosad** | **Myzus persicae auf Kohl / Abtötung in %** | | | | | |
| | **Auswertung nach** | | | | | |
| | **2 Tagen** | | | **7 Tagen** | | |
| | **Spinosad** | **Verbindung (IIIk) 0,0008 % a.i.** | **Spinosad & Verbindung (IIIk)** | **Spinosad** | **Verbindung (IIIk) 0,0008 % a.i.** | **Spinosad & Verbindung (IIIk)** |
| | | | | | | |
| | | | | | | |
| 0,1 | 0 | 48 | **100** | 0 | 28 | **100** |
| 0,02 | 0 | 48 | **100** | 0 | 28 | **100** |
| 0,004 | 0 | 48 | **98** | 0 | 28 | **100** |
| 0,0008 | 0 | 48 | **97** | 0 | 28 | **99** |
| 0,00016 | 0 | 48 | **90** | 0 | 28 | **82** |
| | | | | | | |
| | | | | | | |

| **Spinosad** | **Spinosad** | **Verbindung (IIIk) 0,00016 % a.i.** | **Spinosad & Verbindung (IIIk)** | **Spinosad** | **Verbindung (IIIk) 0,00016 % a.i.** | **Spinosad & Verbindung (IIIk)** |
|---|---|---|---|---|---|---|
| | | | | | | |
| | | | | | | |
| 0,1 | 0 | 10 | **95** | 0 | 2 | **98** |
| 0,02 | 0 | 10 | **97** | 0 | 2 | **54** |
| 0,004 | 0 | 10 | **84** | 0 | 2 | **55** |
| 0,0008 | 0 | 10 | **35** | 0 | 2 | **27** |
| | | | | | | |
| | | | | | | |
| | | | | | | |
| **Kontrolle** | | | 0 | | | 0 |
| Wst.-Konz. = Wirkstoff-Konzentration | | | | | | |
| a.i. = active ingredient = Wirkstoff | | | | | | |

**Tabelle 4:**

| Mischungen Verbindung (III l) und Spinosad | | | | | | |
|---|---|---|---|---|---|---|
| **Wst.- Konz. (% a.i.) Spinosad** | **Myzus persicae auf Kohl / Abtötung in %** | | | | | |
| | **Auswertung nach** | | | | | |
| | **2 Tagen** | | | **7 Tagen** | | |
| | **Spinosad** | **Verbindung (III l) 0,0008 % a.i.** | **Spinosad & Verbindung (III l)** | **Spinosad** | **Verbindung (III l) 0,0008 % a.i.** | **Spinosad & Verbindung (III l)** |
| | | | | | | |
| | | | | | | |
| 0,1 | 0 | 85 | **100** | 0 | 38 | **100** |
| 0,02 | 0 | 85 | **100** | 0 | 38 | **99** |
| 0,004 | 0 | 85 | **100** | 0 | 38 | **83** |
| 0,0008 | 0 | 85 | **93** | 0 | 38 | **95** |
| 0,00016 | 0 | 85 | **83** | 0 | 38 | **53** |
| | | | | | | |
| | | | | | | |

| **Spinosad** | **Spinosad** | **Verbindung (III l) 0,00016 % a.i.** | **Spinosad & Verbindung (III l)** | **Spinosad** | **Verbindung (III l) 0,00016 % a.i.** | **Spinosad & Verbindung (III l)** |
|---|---|---|---|---|---|---|
| | | | | | | |
| | | | | | | |
| 0,1 | 0 | 8 | **94** | 0 | 0 | **94** |
| 0,02 | 0 | 8 | **94** | 0 | 0 | **82** |
| 0,004 | 0 | 8 | **93** | 0 | 0 | **54** |
| 0,0008 | 0 | 8 | **53** | 0 | 0 | **20** |
| 0,00016 | 0 | 8 | **22** | 0 | 0 | **2** |
| | | | | | | |
| | | | | | | |
| **Kontrolle** | | | 0 | | | 0 |
| Wst.-Konz. = Wirkstoff-Konzentration | | | | | | |
| a.i. = active ingredient = Wirkstoff | | | | | | |

### Beispiel 2

### Grenzkonzentrations-Test/Wurzelsystemische Wirkung

| | |
|---|---|
| Testinsekt | **Aphis fabae** |
| Lösungsmittel | 4 Gewichtsteile Aceton |
| Emulgator | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in 250 ml Töpfe und bepflanzt diese mit vorgekeimten Ackerbohnen. Der Wirkstoff kann so von den Pflanzenwurzeln aus dem Boden aufgenommen und in die Blätter transportiert werden.

Für den Nachweis des wurzelsystemischen Effektes werden nach 7 Tagen die Blätter mit den obengenannten Testtieren besetzt. Nach weiteren 7 Tagen erfolgt die Auswertung durch Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

Wirkstoffe, Aufwandmengen und Resultate gehen aus der nachfolgenden Tabelle hervor:

**Tabelle**

| Wurzelsystemisch **Aphis fabae** | | |
|---|---|---|
| Wirkstoff | | Abtötungsgrad in % bei Wirkstoffkonzentrationen |
| | Spinosad Verbindung (IIIa) | 40 ppm = 0 % 0,035 ppm = 50 % |
| Erfindungsgemäß | Spinosad + Verbindung (IIIa) | 40 ppm + 0,035 ppm = 80 % |

### Beispiel 3

### Grenzkonzentrations-Test / Wurzelsystemische Wirkung

| | |
|---|---|
| Testinsekt | **Phaedon cochleariae-Larven** |
| Lösungsmittel | 4 Gewichtsteile Aceton |
| Emulgator | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in 500 ml Töpfe, legt in ca. 1 cm Ablagetiefe, 8 Kohlsamen, schließt die Vertiefung und drückt die Erdoberfläche leicht an.

Für den Nachweis des wurzelsystemischen Effektes werden nach 9 Tagen die Blätter mit den obengenannten Testtieren besetzt. Nach weiteren 3 Tagen erfolgt die Auswertung durch Abschätzen des Blattfrasses in der behandelten bzw. in der unbehandelten Pflanze. Die Wirkung ist 100 %, wenn nur geringe Fraßschäden im Vergleich zu der unbehandelten Kontrolle beobachtet werden; sie ist 0 %, wenn die gesamte Blattmasse gefressen wurde.

Wirkstoffe, Aufwandmengen und Resultate gehen aus der nachfolgenden Tabelle hervor.

**Tabelle**

| Wurzelsystemisch **Phaedon cochleariae-Larven** | | |
|---|---|---|
| Wirkstoff | | Abtötungsgrad in % bei Wirkstoffkonzentrationen |
| | Spinosad Verbindung (IIIh) | 2,50 ppm = 50 % 0,60 ppm = 0 % |
| Erfindungsgemäß: | Spinosad + Verbindung (IIIh) Verbindung (III l) | 2,50 ppm + 5,00 ppm = 90 % 2,50 ppm = 0 % |
| Erfindungsgemäß: | Spinosad + Verbindung (III l) Verbindung (IIIe) | 2,50 ppm + 2,50 ppm = 90 % 5,00 ppm = 0 % |
| Erfindungsgemäß: | Spinosad + Verbindung (IIIe) Verbindung (IIIa) | 2,50 ppm + 5,00 ppm = 98 % 1,25 ppm = 0 % |
| Erfindungsgemäß: | Spinosad + Verbindung (IIIa) Verbindung (IIIk) | 2,50 ppm + 1,25 ppm = 80 % 0,30 ppm = 0 % |
| Erfindungsgemäß: | Spinosad + Verbindung (IIIk) Verbindung (IIIg) | 2,50 ppm + 0,30 ppm = 80 % 0,30 ppm = 50 % |
| Erfindungsgemäß: | Spinosad + Verbindung (IIIg) | 2,50 ppm + 0,30 ppm = 80 % |

## Patentansprüche

1. Synergistische Mittel zur Bekämpfung von tierischen Schädlingen, enthaltend Spinosad und mindestens einen Agonisten bzw. Antagonisten von nicotinergen Acetylcholinrezeptoren aus der Reihe der folgenden Verbindungen der Formeln (IIIa) bis (IIIm)

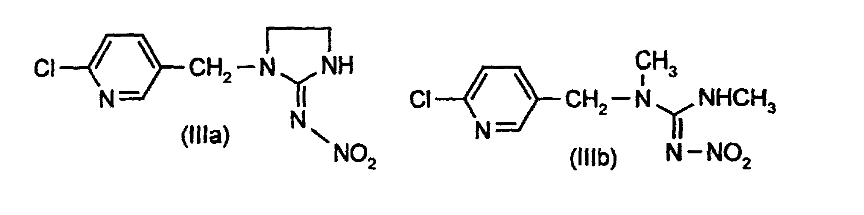

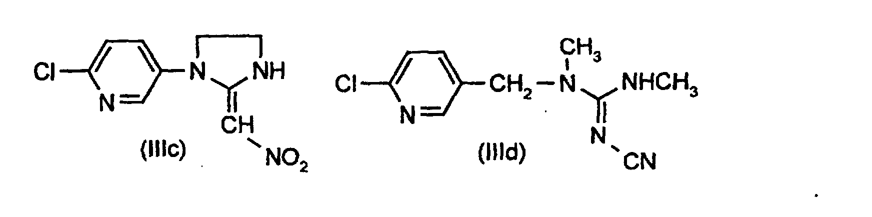

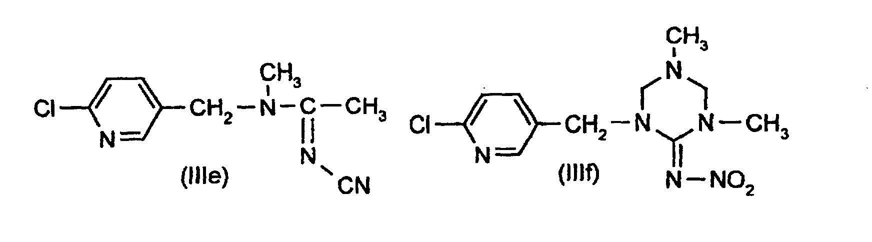

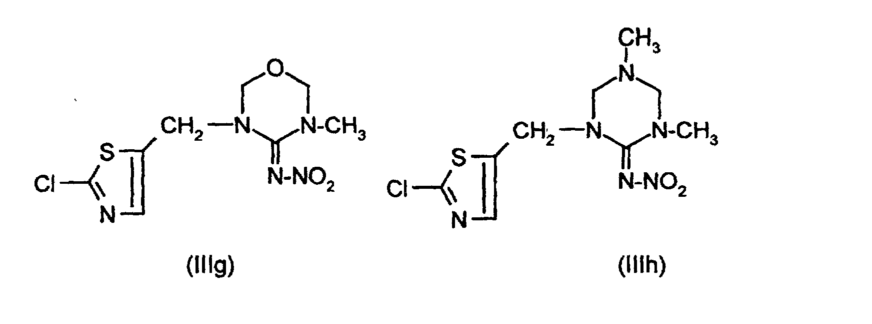

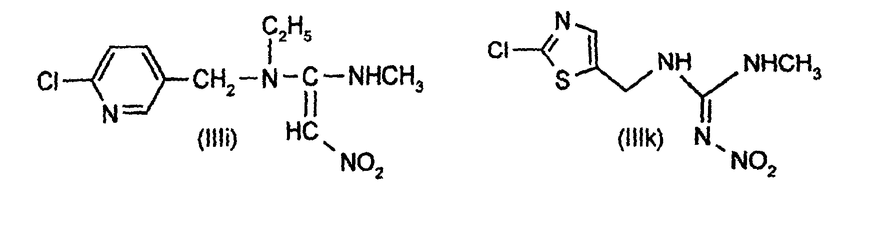

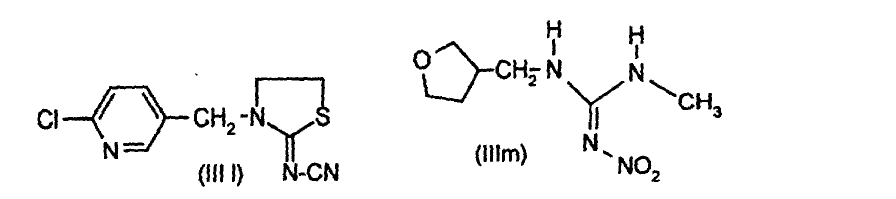

2. Synergistisches Mittel, enthaltend Spinosad und die Verbindung der Formel (IIIa)

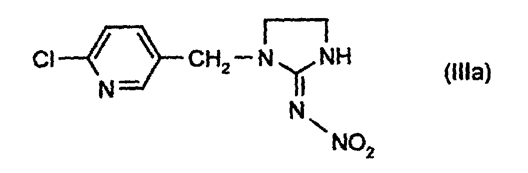

3. Synergistisches Mittel, enthaltend Spinosad und die Verbindung der Formel (IIIg)

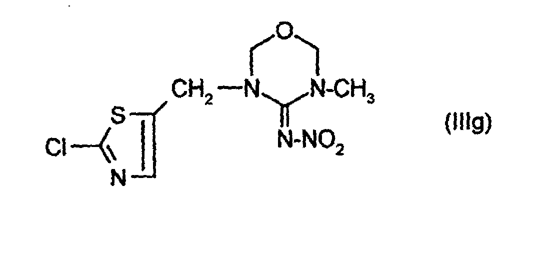

4. Synergistisches Mittel, enthaltend Spinosad und die Verbindung der Formel (IIIe)

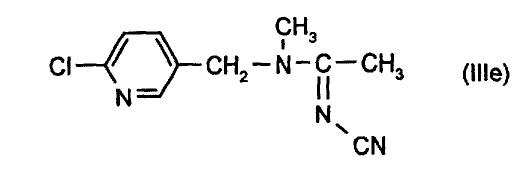

5. Synergistisches Mittel, enthaltend Spinosad und die Verbindung der Formel (IIIi)

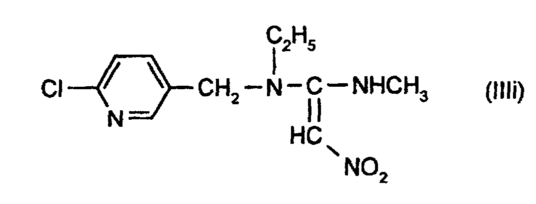

6. Synergistisches Mittel, enthaltend Spinosad und die Verbindung der Formel (IIIk)

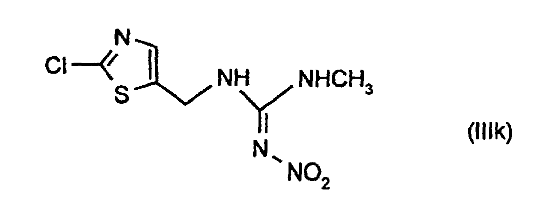

7. Synergistisches Mittel, enthaltend Spinosad und die Verbindung der Formel (IIIl)

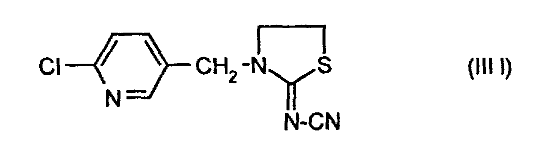

8. Synergistisches Mittel, enthaltend Spinosad und die Verbindung der Formel (IIIm)

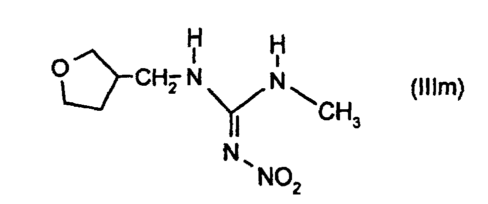

9. Mittel gemäß einem der Ansprüche 1 bis 8, enthaltend Spinosad und den Agonisten bzw. Antagonisten von nicotinergen Acetylcholinrezeptoren im Verhältnis von 1:100 bis 100:1.

10. Verwendung der synergistischen Mittel gemäß Ansprüchen 1 bis 9 zur Bekämpfung von tierischen Schädlingen.

11. Verfahren zur Herstellung von synergistischen Mitteln gemäß Ansprüchen 1 bis 9, **dadurch gekennzeichnet, daß** man eine Mischung von Spinosad und mindestens einem Agonisten bzw. Antagonisten von nicotinergen Acetylcholinrezeptoren mit Streckmitteln und/oder oberflächenaktiven Substanzen vermischt.

## Claims

1. Synergistic composition for controlling animal pests, comprising spinosad and at least one agonist or antagonist of nicotinic acetycholine receptors from the group of the following compounds of the formulae (IIIa) to (IIIm)

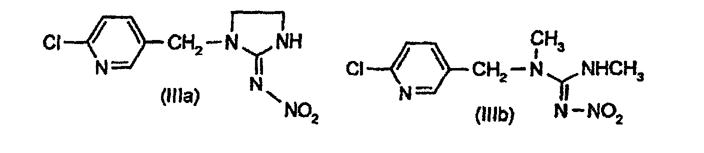

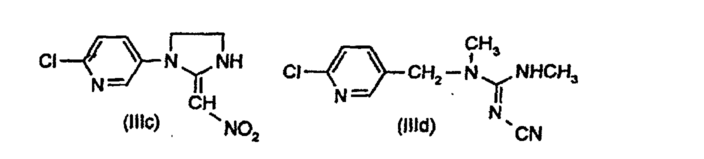

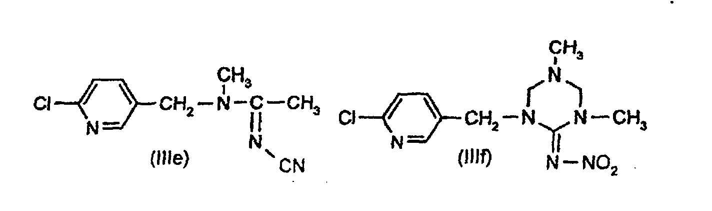

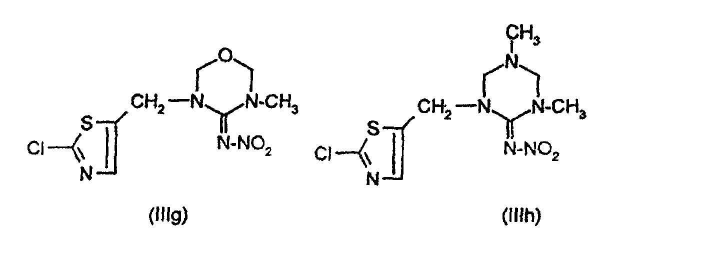

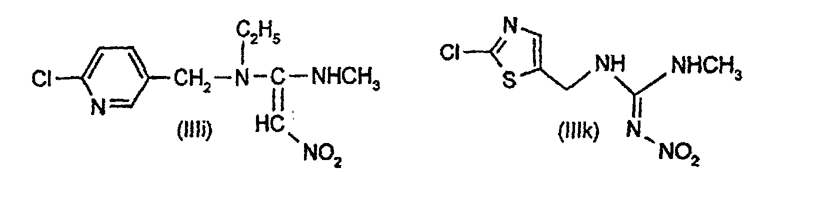

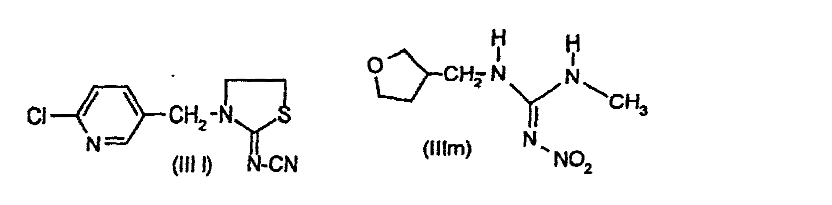

2. Synergistic composition, comprising spinosad and the compound of the formula (IIIa)

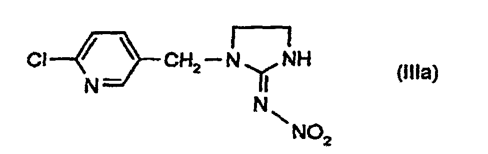

3. Synergistic composition, comprising spinosad and the compound of the formula (IIIg)

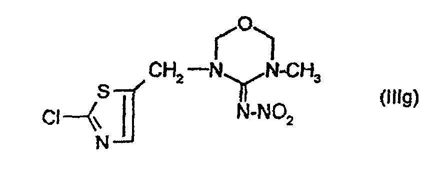

4. Synergistic composition, comprising spinosad and the compound of the formula (IIIe)

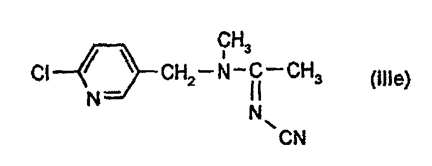

5. Synergistic composition, comprising spinosad and the compound of the formula (IIIi)

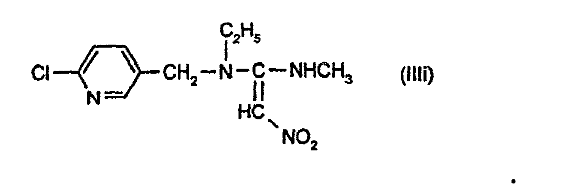

6. Synergistic composition, comprising spinosad and the compound of the formula (IIk)

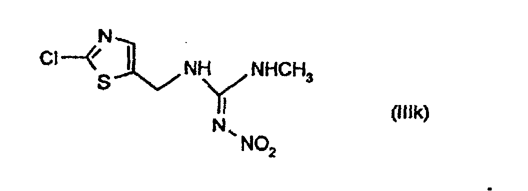

7. Synergistic composition, comprising spinosad and the compound of the formula (IIIl)

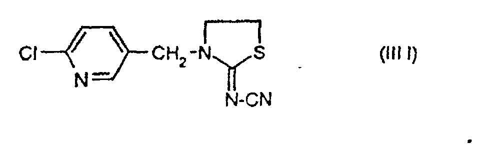

8. Synergistic composition, comprising spinosad and the compound of the formula (IIIm)

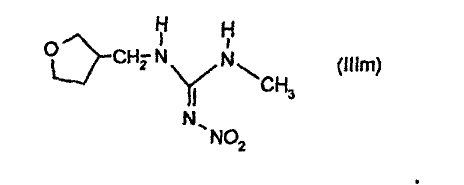

9. Composition according to any of Claims 1 to 8, comprising spinosad and the agonist or antagonist of nicotinic acetycholine receptors in a ratio of from 1:100 to 100:1.

10. Use of the synergistic compositions according to Claims 1 to 9 for controlling animal pests.

11. Process for preparing synergistic compositions according to Claims 1 to 9, **characterized in that** a mixture of spinosad and at least one agonist or antagonist of nicotinic acetycholine receptors is mixed with extenders and/or surfactants.

## Revendications

1. Compositions synergiques destinées à combattre des parasites animaux, contenant du spinosad et au moins un agoniste ou antagoniste des récepteurs nicotinergiques de l'acétylcholine, de la série des composés suivants de formules (IIIa) à (IIIm)

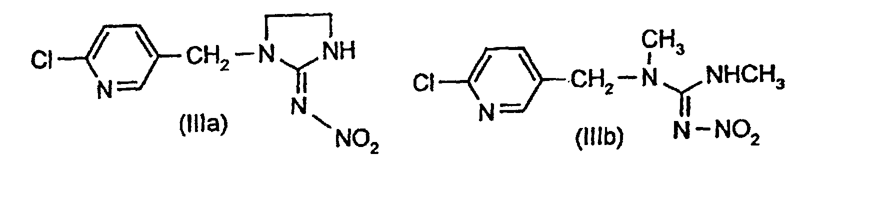

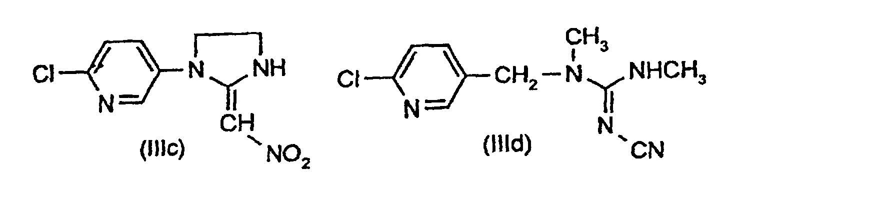

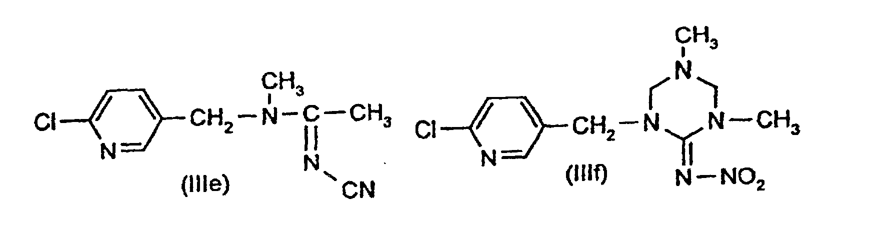

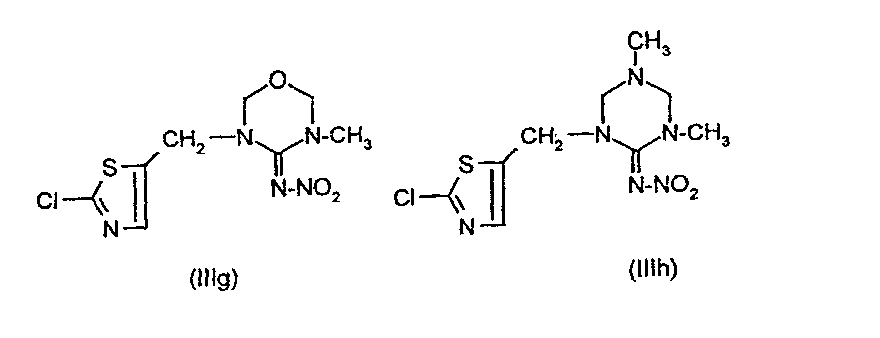

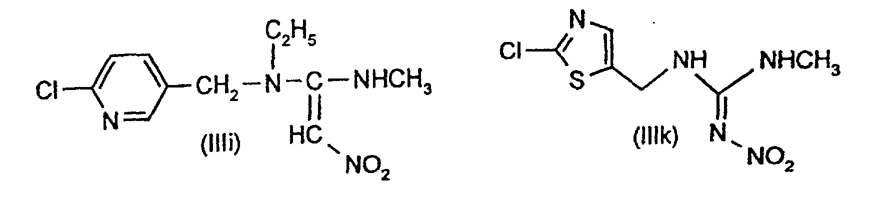

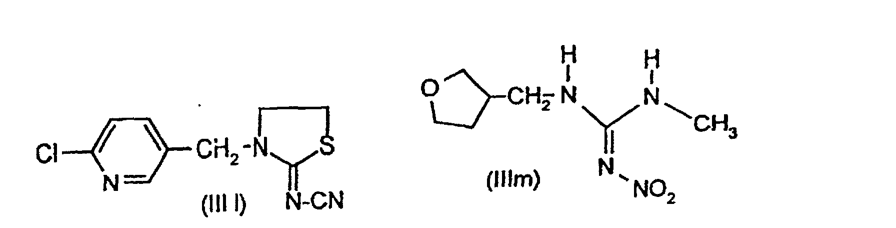

2. Composition synergique, contenant du spinosad et le composé de formule (IIIa)

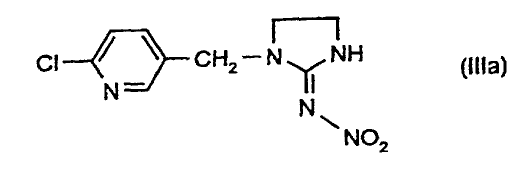

3. Composition synergique contenant du spinosad et le composé de formule (IIIg)

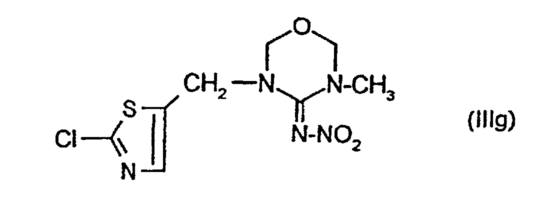

4. Composition synergique, contenant du spinosad et le composé de formule (IIIe)

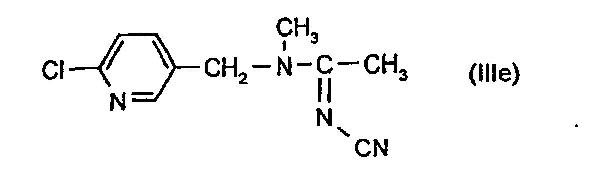

5. Composition synergique, contenant du spinosad et le composé de formule (IIIi)

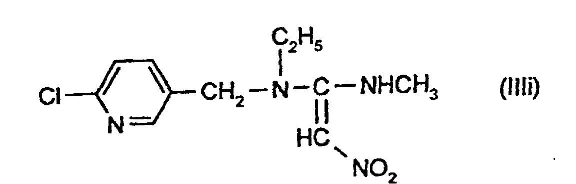

6. Composition synergique, contenant du spinosad et le composé de formule (IIIk)

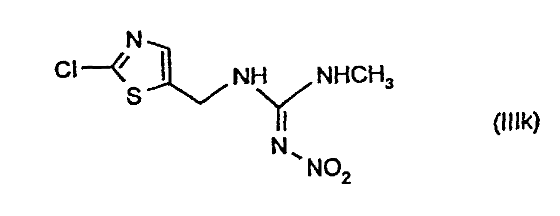

7. Composition synergique, contenant du spinosad et le composé de formule (IIIl)

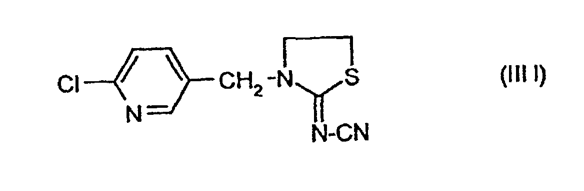

8. Composition synergique, contenant du spinosad et le composé de formule (IIIm)

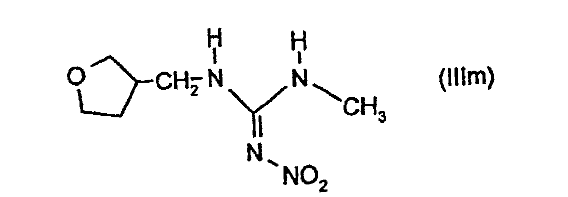

9. Composition suivant l'une des revendications 1 à 8, contenant du spinosad et l'agoniste ou l'antagoniste de récepteurs nicotinergiques de l'acétylcholine dans le rapport de 1:100 à 100:1.

10. Utilisation des compositions synergiques suivant les revendications 1 à 9 pour combattre des parasites animaux.

11. Procédé de préparation de compositions synergiques suivant les revendications 1 à 9, **caractérisé en ce qu'**on mélange avec des diluants et/ou avec des agents tensioactifs un mélange de spinosad et d'au moins un agoniste ou antagoniste des récepteurs nicotinergiques de l'acétylcholine.
